# EUROPEAN PATENT SPECIFICATION

(11) **EP 4 124 474 B1**
(45) Date of publication and mention of the grant of the patent: **25.02.2026**
(21) Application number: 22187260.9
(22) Date of filing: 27.07.2022
(51) Int. Cl.: B60C 23/04

(54) **DUPLEX BLUETOOTH TRANSMISSION TIRE PRESSURE DETECTING SYSTEM AND THE METHOD**
SYSTEM UND VERFAHREN ZUR REIFENDRUCKERKENNUNG MIT DUPLEX-BLUETOOTH-ÜBERTRAGUNG
SYSTÈME DE DÉTECTION DE LA PRESSION DES PNEUS PAR TRANSMISSION BLUETOOTH EN DUPLEX ET PROCÉDÉ

(30) Priority: 30.07.2021 TW 110128009
(43) Date of publication of application: 01.02.2023
(73) Proprietor: Sysgration Ltd., Tapei City 11494 (TW)
(72) Inventor: YU, CHIH WEI, TAIPEI CITY (TW); LIN, SHIH YAO, 11494 TAIPEI CITY (TW)
(74) Representative: Cabinet Chaillot

(56) References cited:
- CN-B- 106 347 041
- KR-B1- 101 349 858
- US-A1- 2019 232 733
- US-A1- 2021 122 197

## Description

### FIELD OF THE INVENTION

The present invention relates to a tire pressure detecting system for vehicles, and more particularly to a duplex communication between a Bluetooth tire pressure detector and a transceiver host to complete positioning and tire condition detection.

### BACKGROUND OF THE INVENTION

The automatic positioning technology of the tire pressure detector means that the transceiver host in the car can receive the signal and automatically determine the position of the tire pressure detector through the tire speed, rotation phase angle, or signal strength. Some tire pressure detectors configured by car manufacturers can automatically locate each time the vehicle is stopped. However, some tire pressure detectors must be removed from the tire and replaced with a new product or be calibrated when the tire pressure detector is out of action due to insufficient power, or during routine maintenance, such as tire rotation for average wear, or tire replacement. Once the locating between the tire pressure detector and the transceiver host is completed, the tire pressure detector simplex transmits the temperature and pressure to the transceiver host, so that the transceiver host can obtain the tire condition.

Documents US20190232733A1, KR101349858B1, CN106347041B and US20210122197A1 illustrate the technological background of a duplex Bluetooth transmission tire pressure system according to claim 1 and methods for duplex Bluetooth detecting tire pressure according to claims 6 and 8.

US20190232733A1 relates to systems and methods for controlling vehicle tire pressure monitoring system (TPMS) sensor localization. This document discloses a vehicle comprises a plurality of TPMS sensors, a communication module, and a controller. The controller detects an initiation event associated with the vehicle, and determines whether a first localization information is valid under the initiation event. The controller initiates, via the communication module, a localization procedure at the TPMS sensors when the first localization information is not valid.

The first localization information is whether the vehicle is moving or vehicle speed satisfies a threshold speed, the controller pairs the TPMS sensors through another communication module, and initiates the localization procedure after pairing. After interrupting the data transmission but not completing the localization and timeout, re-executing the localization can be seen in FIG. 3 of US20190232733A1. It can be seen that both the controller and the TPMS sensor are only holding after a single signal transmission, and the controller does not actively control the TPMS sensor to perform localization and tire condition program operations. In essence, the controller is passively held for the TPMS sensor to transmit localization information, and passively receives tire sensing information from the TPMS sensor.

KR101349858B1 is a tire management system and a vehicle comprising the same. The vehicle comprising vehicle body, a plurality of wheels disposed on the vehicle body, a plurality of tire pressure sensors disposed on the wheels, a power supply applied on the vehicle body and having distance between the wheels, and a control unit. The tire pressure sensor includes a battery for power supply and transmission of a tire information and the voltage value of the transmission battery. This document discloses that the control unit charges the tire pressure sensor through the power supply, and requests tire information from the tire pressure sensor, the tire information includes pressure and temperature. A tire information transmitting and receiving module wirelessly receives the tire information from the tire pressure sensor, and the tire information transmitting and receiving module wirely transmits the tire information to the control unit. In document KR101349858B1 the control unit requests the tire pressure sensor to transmit tire information, however the control unit does not control the tire pressure sensor to perform pairing or localization, but only holds for receiving the tire information after requesting the transmission of tire information, so that merely a one-way transmission.

CN106347041B discloses a Bluetooth tire pressure monitoring system. This document includes a sensor including a Bluetooth module and a receiving device. The sensor detects and transmits the air pressure and temperature of the tire to the receiving device. When the tire is abnormal, the receiving device will give an audible and visual alarm. When repairing tires, the user pairs the receiving device, and initiates the sensor through the two-way function of Bluetooth. Each sensor transmits its unique ID code to the receiving device, or the user manually discards pairing the tires. After the user pairs the tire position, the receiving device determines the tire position according to the RSSI values of a first direction antenna and a second direction antenna, and automatically adjusts the position of the tire.

In CN106347041B, when the user is pairing, the receiving device can only simply hold for the pairing/position data transmitted by the sensor, and the two have timed out in pairing/position (as shown in FIG. 2 and FIG. 3 of CN106347041B). Therefore, the receiving device can only simply receive the pairing/position data. Once the data is missing or interrupted, it can only hold and wait for the sensor to stop transmitting. This process wastes the limited power of the sensor. The sensor performs tire condition detection only after the sensor completes the pairing/position with the receiving device, the sensor only transmits the tire data to the receiving device at regular intervals.

US20210122197A1 is a wheel position detection apparatus and tire pneumatic pressure monitoring system including same. The wheel position detection apparatus is applied to a vehicle including a vehicle body attached with multiple traveling wheels. The apparatus includes: multiple transmitters respectively disposed at traveling wheels; and a receiver disposed at the vehicle body. The transmitter includes an acceleration sensor and a first controller. The acceleration sensor is configured to output a detection signal according to an acceleration, including a gravitational acceleration component being varied by a rotation of the corresponding traveling wheel attached to each transmitter. The first controller includes unique identification information, and transmits the frame in response to the receiver outputting a transmission command. The receiver includes a second controller executing a wheel position detection, identifying the unique identification information from which the traveling wheel's transmitter, and registering the traveling wheels in association with the unique identification information of the transmitter.

In US20210122197A1, an appropriate timing to perform transmission for detecting the wheel position, and a transmission command for instructing transmission is output to each transmitter through the receiver at the appropriate timing. The receiver receives the transmission from the transmitter in response to the transmission command, and performs wheel position detection on the position information of each traveling wheel at the receiving time. Therefore, US20210122197A1 is merely a detection device for detecting the wheel position in a short time.

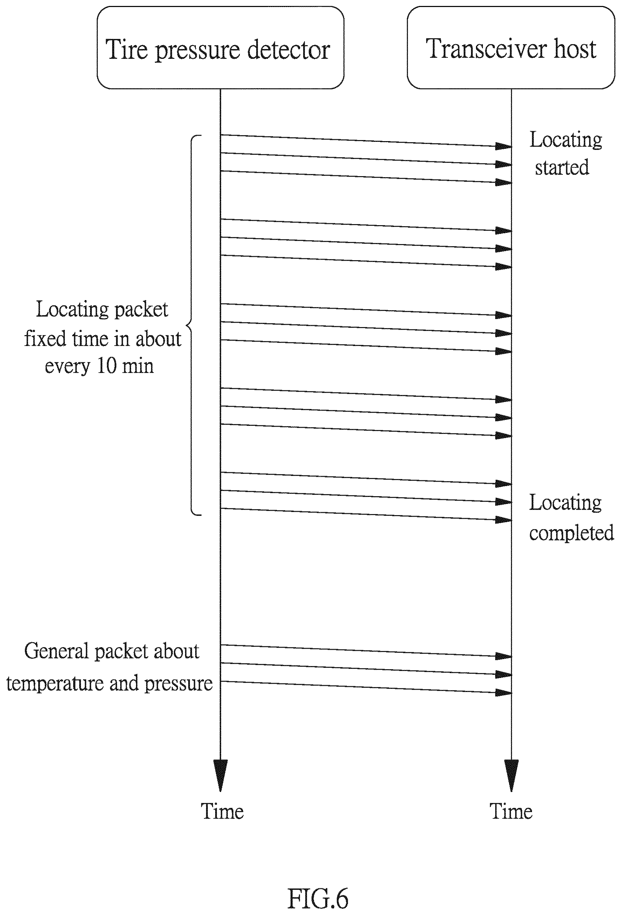

The conventional automatic locating technology of the tire pressure detector is one-way data transmission from the tire pressure detector (as shown in FIG. 6). Generally, the tire pressure detector transmits the locating data would cost about 10 minutes. The positioning calculation of the tire pressure detector is very power-consuming, and has the following effects:
1. Even if the transceiver host has complete locating with the tire pressure detector, the tire pressure detector will continue to transmit the locating data to the transceiver host.
2. After the tire pressure detector and the transceiver host complete the locating, every time the vehicle stops temporarily for more than 10 minutes and restarts, the tire pressure detector will transmit the locating data again, thus wasting time transmitting the locating data.
3. Due to the general tire pressure detector transmitting the locating data for 10 minutes at a fixed time, the transceiver host cannot receive continuous valid data when there is an error or interruption in the locating data received by the transceiver host. As a result, the tire pressure detector can re-transmit the locating data again only when the vehicle is stopped and turned off for restart.

### SUMMARY OF THE INVENTION

The present invention provides a duplex Bluetooth transmission tire pressure system, wherein a Bluetooth tire pressure detector and a transceiver host provide a duplex signal transition to complete locating and tire condition detection, as well as to improve the problems of conventional technology.

In one aspect, to achieve the objective and effort mentioned above, the present invention provides a duplex Bluetooth transmission tire pressure system comprising a transceiver host and a plural of Bluetooth tire pressure detectors. In which, the transceiver host includes a processing unit, a host Bluetooth transceiver unit and a transceiver host antenna. The host Bluetooth transceiver unit is electrically connected to the processing unit and the transceiver host antenna. Further, each of the Bluetooth tire pressure detectors includes a battery, a monitoring module, a control unit, a Bluetooth transceiver unit and a transceiver antenna; in which, the battery is electrically connected to the control unit and the monitoring module, and the control unit electrically connected to the monitoring module, the Bluetooth transceiver unit electrically connected to the control unit and the transceiver antenna. Further, the control unit includes a locating program and a tire condition program, and the data detected by the monitoring module is obtained by the locating program and the tire condition program. Furthermore, the transceiver host antenna of the host Bluetooth transceiver unit and the transceiver antenna of the Bluetooth transceiver unit constitute a duplex Bluetooth packet transmission, and the host Bluetooth transceiver unit of the transceiver host controls the control unit to start or stop the locating program and limit the packet transmission of the tire condition program.

In another aspect, the present invention provides a method for duplex Bluetooth detecting tire pressure, comprising: starting a vehicle; a transceiver host transmitting a Bluetooth controlling packet to a Bluetooth tire pressure detector to start a locating program and a tire condition program; the Bluetooth tire pressure detector transmitting the Bluetooth locating packet to the transceiver host; the transceiver host receiving the Bluetooth locating packet till the locating finished; the transceiver host transmitting the Bluetooth controlling packet to the Bluetooth tire pressure detector to stop the locating program and start the tire condition program; the monitoring module of the Bluetooth tire pressure detector detecting the tire rotating and generate a Bluetooth tire condition packet; the Bluetooth tire pressure detector transmitting the Bluetooth tire condition packet to the transceiver host.

In yet another aspect, the present invention provides a method for duplex Bluetooth detecting tire pressure, comprising: starting a vehicle; a transceiver host transmitting a Bluetooth controlling packet to a Bluetooth tire pressure detector to start a locating program and a tire condition program; the Bluetooth tire pressure detector detecting the tire rotating and generate a Bluetooth locating packet and a Bluetooth tire condition packet; the Bluetooth tire pressure detector transmitting the Bluetooth locating packet and the Bluetooth tire condition packet to the transceiver host; the transceiver host receiving the Bluetooth locating packet till the locating finished; the transceiver host transmitting a Bluetooth controlling packet to a Bluetooth tire pressure detector to stop a locating program.

### BRIEF DESCRIPTION OF THE DRAWINGS

The described embodiments may be better understood by reference to the following description and the accompanying drawings in which:
FIG. 1 is a block schematic diagram of a duplex Bluetooth transmission tire pressure system of the present invention.
FIG. 2 is a block schematic diagram of operating the duplex Bluetooth transmission tire pressure system of the present invention.
FIG. 3 is a schematic view of the duplex signal transmission between a Bluetooth tire pressure detector and a transceiver host of the present invention.
FIG. 4 is a flowchart schematic view of a method for duplex Bluetooth detecting the tire pressure of the present invention.
FIG. 5 is a flowchart schematic view of another method for duplex Bluetooth detecting the tire pressure of the present invention.
FIG. 6 is a schematic view of a conventional tire pressure detector transmitting the signal to the transceiver host.

### DETAILED DESCRIPTION OF THE EXEMPLARY EMBODIMENTS

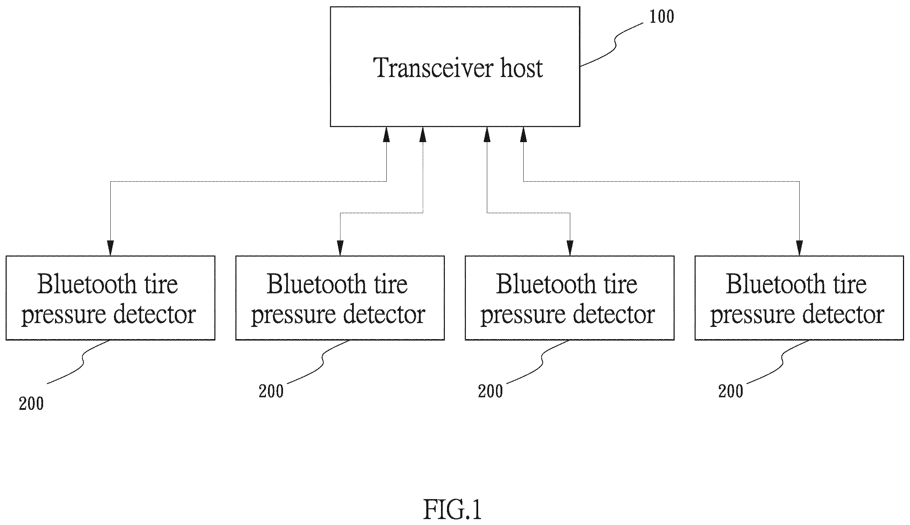

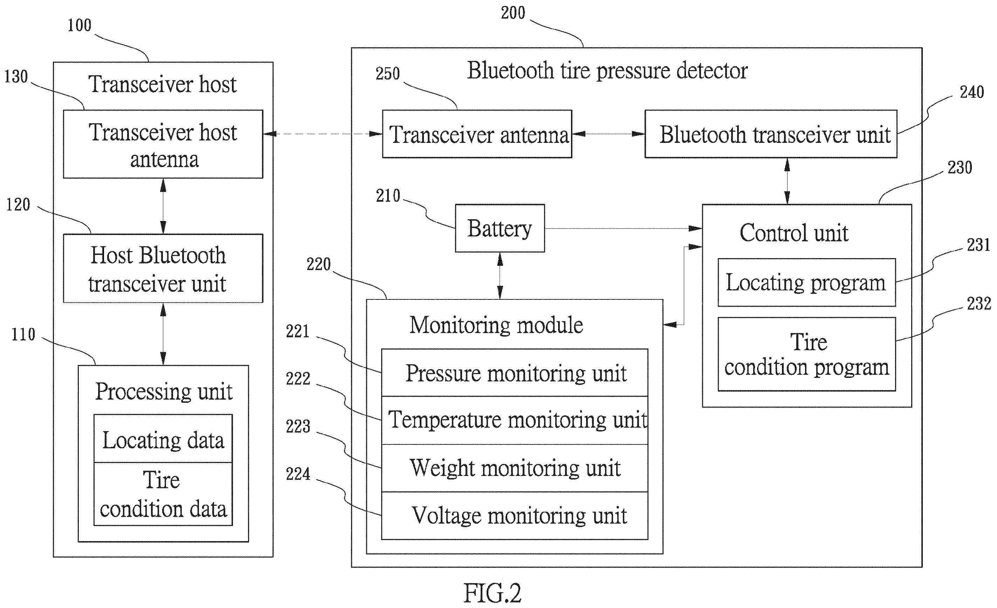

Referring to FIGS. 1-3, the present invention provides a duplex Bluetooth transmission tire pressure system, including a transceiver host 100 and a plural of Bluetooth tire pressure detectors 200 (for example, four Bluetooth tire pressure detectors as shown in FIG. 1). The transceiver host 100 includes a processing unit 110, a host Bluetooth transceiver unit 120 and a transceiver host antenna 130. In which, the host Bluetooth transceiver unit 120 is electrically connected to the processing unit 110 and the transceiver host antenna 130. Each of the Bluetooth tire pressure detectors 200 includes a battery 210, a monitoring module 220, a control unit 230, a Bluetooth transceiver unit 240 and a transceiver antenna 250. The battery 210 is electrically connected to the control unit 230 and the monitoring module 220, and the control unit 230 is electrically connected to the monitoring module 220. The Bluetooth transceiver unit 240 is electrically connected to the control unit 230 and the transceiver antenna 250. Further, the control unit 230 includes a locating program 230 and a tire condition program 232. The data detected by the monitoring module 220 is obtained by the locating program 231 and the tire condition program 232. Moreover, the transceiver host antenna 130 of the host Bluetooth transceiver unit 120 and the transceiver antenna 130 of the Bluetooth transceiver unit 240 constitute a duplex Bluetooth packet transmission. The host Bluetooth transceiver unit 120 of the transceiver host 100 controls the control unit 230 to start or stop the locating program 231 and limit the packet transmission of the tire condition program 232.

For example, the transceiver host 100 mentioned above is located inside the vehicle, and the Bluetooth tire pressure detector 200 is mounted on the tire of the vehicle (which can be either an inner side or an outer side). The monitoring module 220 includes a pressure monitoring unit 221, a temperature monitoring unit 222, a gravity monitoring unit 223 and a voltage monitoring unit 224. Through the pressure monitoring unit 221, the temperature monitoring unit 222, and the gravity monitoring unit 223, information for assisting in locating can be detected, such as tire pressure, temperature, acceleration, rotation time, rotation phase, and tire position, etc. In addition, the voltage of the battery 210 can be detected through the voltage monitoring unit 224, so as to prevent the voltage of the battery 210 from being lower than the operating voltage of the monitoring module 220 and the control unit 230, and prevent abnormality or insufficient power in the battery 210.

When the transceiver host 100 controls the control unit 230 by Bluetooth to operate the tire condition program 232 and limit transmitting the data of the monitoring module 220, the control unit 230 transmits the packet to the transceiver host 100 when the data from the monitoring module 220 compared to the default value of tire condition program 232 shows an abnormal state.

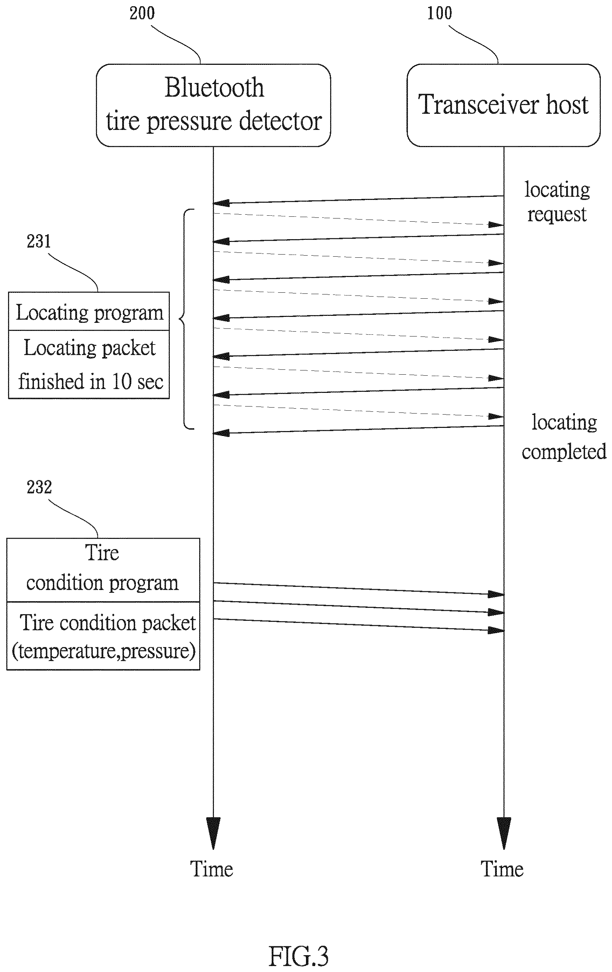

It is worth mentioning that, in one embodiment, the transceiver host 100 controls the control unit 230 by Bluetooth to operate the locating program 231 first, and then to operate the tire condition program 232 after the operation of the locating program 232 is finished. The order of the processes is as shown in FIG.3. In another embodiment, the transceiver host 100 controls the control unit 230 via Bluetooth to operate the locating program 231 and the tire condition program 232 simultaneously.

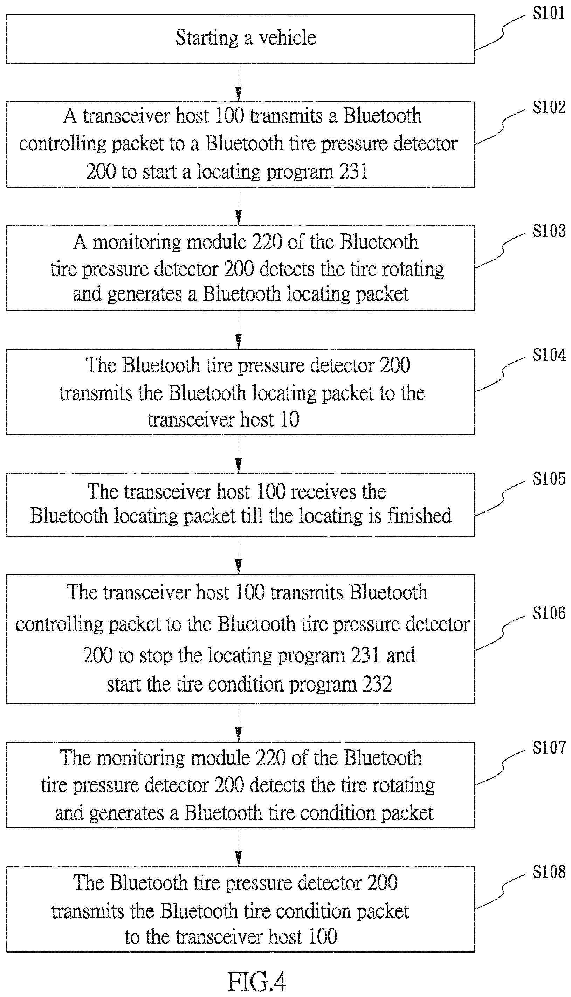

In conjunction with FIG. 4, which is a method for duplex Bluetooth detecting tire pressure, including:
S101: starting a vehicle;
S102: a transceiver host 100 transmits a Bluetooth controlling packet to a Bluetooth tire pressure detector 200 to start a locating program 231;
S103: a monitoring module 220 of the Bluetooth tire pressure detector 200 detects the tire rotating and generates a Bluetooth locating packet;
S104: the Bluetooth tire pressure detector 200 transmits the Bluetooth locating packet to the transceiver host 100;
S105: the transceiver host 100 receives the Bluetooth locating packet till the locating is finished;
S106: the transceiver host 100 transmits Bluetooth controlling packet to the Bluetooth tire pressure detector 200 to stop the locating program 231 and start the tire condition program 232;
S107 : the monitoring module 220 of the Bluetooth tire pressure detector 200 detects the tire rotating and generates a Bluetooth tire condition packet; and
S108 : the Bluetooth tire pressure detector 200 transmits the Bluetooth tire condition packet to the transceiver host 100;

The above-mentioned transmitting the Bluetooth locating packet to the transceiver host 100 is completed within 10 seconds from the beginning to the end, and the locating program 231 is turned off. The above-mentioned transmitting the Bluetooth tire condition packet to the transceiver host 100 is completed within 3 seconds from the beginning to the end, and contentious the tire condition program 232.

When the transceiver host 100 controls the control unit 230 by Bluetooth to operate the tire condition program 232 and limit transmitting the data of the monitoring module 220, the control unit 230 transmits the packet to the transceiver host 100 when the data from the monitoring module 220 compared to the default value of the tire condition program 232 shows an abnormal state.

The Bluetooth tire pressure system of the present invention can duplex transmit the packets. According to the needs, the transceiver host 100 controls the Bluetooth tire pressure detector 200 by Bluetooth and operates the tire condition program 231; during this time, the Bluetooth tire pressure detector 200 transmits the Bluetooth locating packet to the transceiver host 100 continuously. When the transceiver host 100 completes the locating of the Bluetooth tire pressure detector 200, the transceiver host 100 transmits a Bluetooth control packet to control the Bluetooth tire pressure detector 200 turning the locating program 231 off and operating the tire condition program 232.

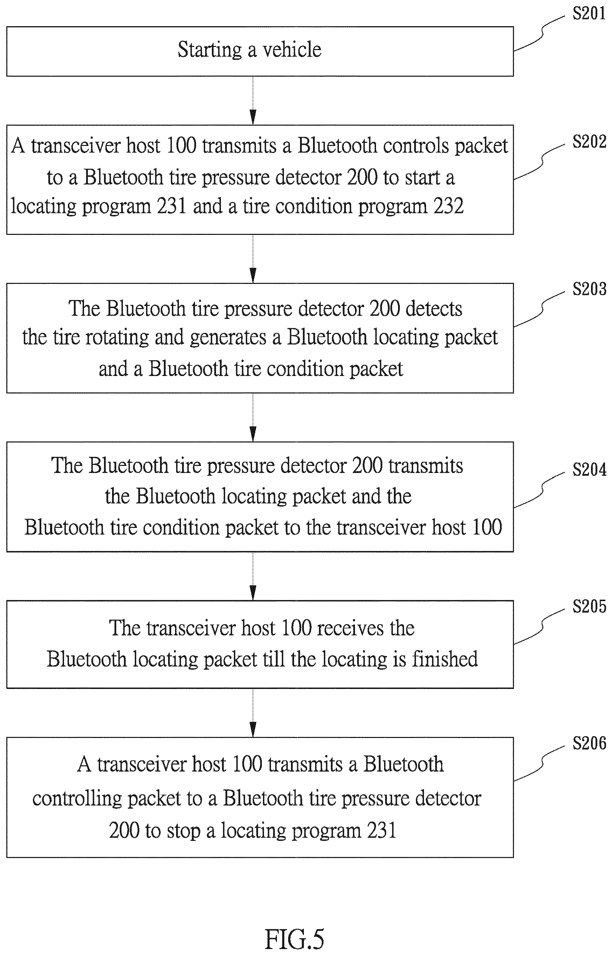

In conjunction with FIG. 5, which is a method for duplex Bluetooth detecting tire pressure, including:
S201: starting a vehicle;
S202: a transceiver host 100 transmits a Bluetooth controls packet to a Bluetooth tire pressure detector 200 to start a locating program 231 and a tire condition program 232;
S203: the Bluetooth tire pressure detector 200 detects the tire rotating and generates a Bluetooth locating packet and a Bluetooth tire condition packet;
S204: the Bluetooth tire pressure detector 200 transmits the Bluetooth locating packet and the Bluetooth tire condition packet to the transceiver host 100;
S205: the transceiver host 100 receives the Bluetooth locating packet till the locating is finished;
S206: a transceiver host 100 transmits a Bluetooth controlling packet to a Bluetooth tire pressure detector 200 to stop a locating program 231.

The Bluetooth tire pressure system of the present invention can duplex transmit the packets. According to the needs, the transceiver host 100 commands the Bluetooth tire pressure detector 200 by Bluetooth to operate the tire condition program 231 and the tire condition program 232; during this time, the Bluetooth tire pressure detector 200 transmits the Bluetooth locating packet and the Bluetooth tire condition packet to the transceiver host 100 continuously. When the transceiver host 100 completes the locating of the Bluetooth tire pressure detector 200, the transceiver host 100 transmits a Bluetooth control packet to command the Bluetooth tire pressure detector 200 turning the locating program 231 off and keeping operating the tire condition program 232.

Therefore, the duplex Bluetooth transmission tire pressure system/method of the present invention has the following advantages:
1. The transceiver host 100 can simultaneously check the data when the Bluetooth locating packet data is received by Bluetooth to ensure whether the Bluetooth locating packet is valid (no errors or interruptions) so that the locating between the Bluetooth tire pressure detector 200 and the transceiver host 100 can be completed in a short time.
2. The Bluetooth tire pressure detector 200 can be controlled by the transceiver host 100 to operate the locating program 231 and the tire condition program 232, and after obtaining the locating data of the Bluetooth tire pressure detector 200, the transceiver host 100 transmits a Bluetooth control packet to the Bluetooth tire pressure detector 200 to continuously operate the tire condition program 232. The Bluetooth tire pressure detector 200 only operates and is controlled by the transceiver host 100 when there is a locating requirement, so that the Bluetooth tire pressure detector 200 will not start automatically even when the vehicle temporarily stops and begins again.
3. Errors in the locating data of the tire pressure detector can be prevented. In the conventional art, the vehicle must be stopped for a period of time before the tire pressure detector re-transmits the locating data to the transceiver host. At the same time, the present invention can transmit the locating data again in a short time.
4. Through the above-mentioned operating mechanism, the transceiver host 100 can control the time of the Bluetooth tire pressure detector 200 to operate locating, which saves the time of locating compared with the conventional art; the present invention indeed saves the electricity of the Bluetooth tire pressure detector 200 to operate and locate.

## Claims

1. A duplex Bluetooth transmission tire pressure system, comprising a transceiver host (100) and a plural of Bluetooth tire pressure detectors (200);
wherein the transceiver host (100) includes a processing unit (110), a host Bluetooth transceiver unit (120) and a transceiver host antenna (130); wherein the host Bluetooth transceiver unit (120) is electrically connected to the processing unit (110) and the transceiver host antenna (130);
wherein each of the plural of Bluetooth tire pressure detectors (200) includes a battery (210), a monitoring module (220), a control unit (230), a Bluetooth transceiver (240) unit and a transceiver antenna (250); wherein the battery (210) is electrically connected to the control unit (230) and the monitoring module (220), the control unit (230) is electrically connected to the monitoring module (220), the Bluetooth transceiver unit (240) is electrically connected to the control unit (230) and the transceiver antenna (250); wherein the control unit (230) includes a locating program (230) and a tire condition program (232), and the data detected by the monitoring module (220) is obtained by the locating program (231) and the tire condition program (232);
**characterized in that** the transceiver host antenna (130) of the host Bluetooth transceiver unit (120) and the transceiver antenna (130) of the Bluetooth transceiver unit (240) constitute a duplex Bluetooth packet transmission, and the host Bluetooth transceiver unit (120) of the transceiver host (100) controls the control unit (230) to start or stop the locating program (231) and limit the packet transmission of the tire condition program (232).

2. The duplex Bluetooth transmission tire pressure system according to claim 1, wherein the monitoring module (220) includes a pressure monitoring unit (221), a temperature monitoring unit (222), a gravity monitoring unit (223) and a voltage monitoring unit (224).

3. The duplex Bluetooth transmission tire pressure system according to claim 1, wherein when the transceiver host (100) controls the control unit (230) by Bluetooth to operate the tire condition program (232) and limit transmitting the data of the monitoring module (220), the control unit (230) transmits the packet to the transceiver host (100) when data from the monitoring module (220) compared to the default value of the tire condition program (232) shows an abnormal state.

4. The duplex Bluetooth transmission tire pressure system according to claim 1, wherein the transceiver host (100) controls the locating program (231) and the tire condition program (232) of the control unit (230) via Bluetooth to operate simultaneously.

5. The duplex Bluetooth transmission tire pressure system according to claim 1, wherein the transceiver host (100) controls the locating program (231) of the control unit (230) to operate first, and then the tire condition program (232) of the control unit (230) starts after the operation of the locating program (231) is finished.

6. A method for duplex Bluetooth detecting tire pressure, comprising
starting a vehicle;
a transceiver host (100) transmits a Bluetooth controlling packet to a Bluetooth tire pressure detector (200) to start a locating program (231);
a monitoring module (220) of the Bluetooth tire pressure detector (200) detects the tire rotating and generats a Bluetooth locating packet; and
the Bluetooth tire pressure detector (200) transmits the Bluetooth locating packet to the transceiver host (100);
**characterized in that** the method further comprises:
the transceiver host (100) receives the Bluetooth locating packet till the locating is finished;
the transceiver host (100) transmits the Bluetooth controlling packet to the Bluetooth tire pressure detector (200) to stop the locating program (231) and start the tire condition program (232);
the monitoring module (220) of the Bluetooth tire pressure detector (200) detects the tire rotating and generates a Bluetooth tire condition packet;
the Bluetooth tire pressure detector (200) transmits the Bluetooth tire condition packet to the transceiver host (100).

7. The method for duplex Bluetooth detecting tire pressure according to claim 6, wherein when the transceiver host (100) controls the control unit (230) by Bluetooth to operate the tire condition program (232) and limit transmitting the data of the monitoring module (220), the control unit (230) transmits the packet to the transceiver host (100) when data from the monitoring module (220) compared to the default value of the tire condition program (232) shows an abnormal state.

8. A method for duplex Bluetooth detecting tire pressure, comprising:
starting a vehicle;
a transceiver host (100) transmits a Bluetooth controlling packet to a Bluetooth tire pressure detector (200) to start a locating program (231) and a tire condition program (232);
the Bluetooth tire pressure detector (200) detects the tire rotating and generates a Bluetooth locating packet and a Bluetooth tire condition packet;
the Bluetooth tire pressure detector (200) transmits the Bluetooth locating packet and the Bluetooth tire condition packet to the transceiver host (100);
**characterized in that** the method further comprises:
the transceiver host (100) receives the Bluetooth locating packet till the locating is finished;
a transceiver host (100) transmits a Bluetooth controlling packet to a Bluetooth tire pressure detector (200) to stop a locating program (231).

9. The method for duplex Bluetooth detecting tire pressure according to claim 8, wherein when the transceiver host (100) controls the control unit (230) by Bluetooth to operate the tire condition program (232) and limit transmitting the data of the monitoring module (220), the control unit (230) transmits the packet to the transceiver host (100) when data from the monitoring module (220) compared to the default value of the tire condition program (232) shows an abnormal state.

## Patentansprüche

1. - Reifendrucksystem mit Duplex-Bluetooth-Übertragung, umfassend einen Sendeempfänger-Host (100) und eine Vielzahl von Bluetooth-Reifendruckdetektoren (200);
wobei der Sendeempfänger-Host (100) eine Verarbeitungseinheit (110), eine Host-Bluetooth-Sendeempfängereinheit (120) und eine Sendeempfänger-Host-Antenne (130) beinhaltet; wobei die Host-Bluetooth-Sendeempfängereinheit (120) elektrisch mit der Verarbeitungseinheit (110) und der Sendeempfänger-Host-Antenne (130) verbunden ist;
wobei jeder der Vielzahl von Bluetooth-Reifendruckdetektoren (200) eine Batterie (210), ein Überwachungsmodul (220), eine Steuereinheit (230), eine Bluetooth-Sendeempfängereinheit (240) und eine Sendeempfängerantenne (250) beinhaltet; wobei die Batterie (210) elektrisch mit der Steuereinheit (230) und dem Überwachungsmodul (220) verbunden ist, die Steuereinheit (230) elektrisch mit dem Überwachungsmodul (220) verbunden ist, die Bluetooth-Sendeempfängereinheit (240) elektrisch mit der Steuereinheit (230) und der Sendeempfängerantenne (250) verbunden ist; wobei die Steuereinheit (230) ein Ortungsprogramm (230) und ein Reifenzustandsprogramm (232) beinhaltet und die Daten, die durch das Überwachungsmodul (220) erfasst werden, durch das Ortungsprogramm (231) und das Reifenzustandsprogramm (232) erlangt werden;
**dadurch gekennzeichnet, dass** die Sendeempfänger-Host-Antenne (130) der Host-Bluetooth-Sendeempfängereinheit (120) und die Sendeempfängerantenne (130) der Bluetooth-Sendeempfängereinheit (240) eine Duplex-Bluetooth-Paketübertragung bilden, und die Host-Bluetooth-Sendeempfängereinheit (120) des Sendeempfänger-Hosts (100) die Steuereinheit (230) steuert, um das Ortungsprogramm (231) zu starten oder zu stoppen und die Paketübertragung des Reifenzustandsprogramms (232) zu begrenzen.

2. - Duplex-Bluetooth-Reifendruckübertragungssystem nach Anspruch 1, wobei das Überwachungsmodul (220) eine Drucküberwachungseinheit (221), eine Temperaturüberwachungseinheit (222), eine Schwerkraftüberwachungseinheit (223) und eine Spannungsüberwachungseinheit (224) beinhaltet.

3. - Duplex-Bluetooth-Reifendruckübertragungssystem nach Anspruch 1, wobei, wenn der Sendeempfänger-Host (100) die Steuereinheit (230) über Bluetooth steuert, um das Reifenzustandsprogramm (232) zu betreiben und eine Übertragung der Daten des Überwachungsmoduls (220) zu begrenzen, die Steuereinheit (230) das Paket an den Sendeempfänger-Host (100) überträgt, wenn die Daten von dem Überwachungsmodul (220) im Vergleich zu dem Standardwert des Reifenzustandsprogramms (232) einen anormalen Zustand zeigen.

4. - Duplex-Bluetooth-Reifendruckübertragungssystem nach Anspruch 1, wobei der Sendeempfänger-Host (100) das Ortungsprogramm (231) und das Reifenzustandsprogramm (232) der Steuereinheit (230) über Bluetooth steuert, um gleichzeitig betrieben zu werden.

5. - Duplex-Bluetooth-Reifendruckübertragungssystem nach Anspruch 1, wobei der Sendeempfänger-Host (100) das Ortungsprogramm (231) der Steuereinheit (230) steuert, um zuerst betrieben zu werden, und dann das Reifenzustandsprogramm (232) der Steuereinheit (230) startet, nachdem der Betrieb des Ortungsprogramms (231) beendet ist.

6. - Duplex-Bluetooth-Reifendruckerfassungsverfahren, umfassend
ein Starten eines Fahrzeugs;
ein Sendeempfänger-Host (100) überträgt ein Bluetooth-Steuerungspaket an einen Bluetooth-Reifendruckdetektor (200), um ein Ortungsprogramm (231) zu starten;
ein Überwachungsmodul (220) des Bluetooth-Reifendruckdetektors (200) erfasst die Reifendrehung und erzeugt ein Bluetooth-Ortungspaket; und
der Bluetooth-Reifendruckdetektor (200) überträgt das Bluetooth-Ortungspaket an den Sendeempfänger-Host (100);
**dadurch gekennzeichnet, dass** das Verfahren ferner Folgendes umfasst:
der Sendeempfänger-Host (100) empfängt das Bluetooth-Ortungspaket, bis die Ortung beendet ist;
der Sendeempfänger-Host (100) überträgt das Bluetooth-Steuerungspaket an den Bluetooth-Reifendruckdetektor (200), um das Ortungsprogramm (231) zu stoppen und das Reifenzustandsprogramm (232) zu starten;
das Überwachungsmodul (220) des Bluetooth-Reifendruckdetektors (200) erfasst die Reifendrehung und erzeugt ein Bluetooth-Reifenzustandspaket;
der Bluetooth-Reifendruckdetektor (200) überträgt das Bluetooth-Reifenzustandspaket an den Sendeempfänger-Host (100).

7. - Duplex-Bluetooth-Reifendruckerfassungsverfahren nach Anspruch 6, wobei, wenn der Sendeempfänger-Host (100) die Steuereinheit (230) über Bluetooth steuert, um das Reifenzustandsprogramm (232) zu betreiben und eine Übertragung der Daten des Überwachungsmoduls (220) zu begrenzen, die Steuereinheit (230) das Paket an den Sendeempfänger-Host (100) überträgt, wenn die Daten von dem Überwachungsmodul (220) im Vergleich zu dem Standardwert des Reifenzustandsprogramms (232) einen anormalen Zustand zeigen.

8. - Duplex-Bluetooth-Reifendruckerfassungsverfahren, umfassend:
Starten eines Fahrzeugs;
ein Sendeempfänger-Host (100) überträgt ein Bluetooth-Steuerungspaket an einen Bluetooth-Reifendruckdetektor (200), um ein Ortungsprogramm (231) und ein Reifenzustandsprogramm (232) zu starten;
der Bluetooth-Reifendruckdetektor (200) erfasst die Reifendrehung und erzeugt ein Bluetooth-Ortungspaket und ein Bluetooth-Reifenzustandspaket;
der Bluetooth-Reifendruckdetektor (200) überträgt das Bluetooth-Ortungspaket und das Bluetooth-Reifenzustandspaket an den Sendeempfänger-Host (100);
**dadurch gekennzeichnet, dass** das Verfahren ferner Folgendes umfasst:
der Sendeempfänger-Host (100) empfängt das Bluetooth-Ortungspaket, bis die Ortung beendet ist;
ein Sendeempfänger-Host (100) überträgt ein Bluetooth-Steuerungspaket an einen Bluetooth-Reifendruckdetektor (200), um ein Ortungsprogramm (231) zu stoppen;

9. - Duplex-Bluetooth-Reifendruckerfassungsverfahren nach Anspruch 8, wobei, wenn der Sendeempfänger-Host (100) die Steuereinheit (230) über Bluetooth steuert, um das Reifenzustandsprogramm (232) zu betreiben und eine Übertragung der Daten des Überwachungsmoduls (220) zu begrenzen, die Steuereinheit (230) das Paket an den Sendeempfänger-Host (100) überträgt, wenn die Daten von dem Überwachungsmodul (220) im Vergleich zu dem Standardwert des Reifenzustandsprogramms (232) einen anormalen Zustand zeigen.

## Revendications

1. - Système de pression de pneus à transmission Bluetooth en duplex, comprenant un hôte émetteur-récepteur (100) et une pluralité de détecteurs de pression de pneus Bluetooth (200) ;
dans lequel l'hôte émetteur-récepteur (100) comprend une unité de traitement (110), une unité émettrice-réceptrice Bluetooth d'hôte (120) et une antenne d'hôte émetteur-récepteur (130) ; l'unité émettrice-réceptrice Bluetooth d'hôte (120) étant connectée électriquement à l'unité de traitement (110) et à l'antenne d'hôte émetteur-récepteur (130) ;
dans lequel chacun de la pluralité de détecteurs de pression de pneus Bluetooth (200) comprend une batterie (210), un module de surveillance (220), une unité de commande (230), une unité émettrice-réceptrice Bluetooth (240) et une antenne émettrice-réceptrice (250) ; la batterie (210) étant connectée électriquement à l'unité de commande (230) et au module de surveillance (220), l'unité de commande (230) étant connectée électriquement au module de surveillance (220), l'unité émettrice-réceptrice Bluetooth (240) étant connectée électriquement à l'unité de commande (230) et à l'antenne émettrice-réceptrice (250) ; l'unité de commande (230) comprenant un programme de localisation (230) et un programme d'état de pneus (232), et les données détectées par le module de surveillance (220) étant obtenues par le programme de localisation (231) et le programme d'état de pneus (232) ;
**caractérisé par le fait que** l'antenne d'hôte émetteur-récepteur (130) de l'unité émettrice-réceptrice Bluetooth d'hôte (120) et l'antenne émettrice-réceptrice (130) de l'unité émettrice-réceptrice Bluetooth (240) constituent une transmission de paquets Bluetooth en duplex, et l'unité émettrice-réceptrice Bluetooth d'hôte (120) de l'hôte émetteur-récepteur (100) commande l'unité de commande (230) pour démarrer ou arrêter le programme de localisation (231) et limiter la transmission de paquets du programme d'état de pneus (232).

2. - Système de pression de pneus à transmission Bluetooth en duplex selon la revendication 1, dans lequel le module de surveillance (220) comprend une unité de surveillance de pression (221), une unité de surveillance de température (222), une unité de surveillance de gravité (223) et une unité de surveillance de tension (224).

3. - Système de pression de pneus à transmission Bluetooth en duplex selon la revendication 1, dans lequel, lorsque l'hôte émetteur-récepteur (100) commande l'unité de commande (230) par Bluetooth pour commander le programme d'état de pneus (232) et limiter la transmission des données du module de surveillance (220), l'unité de commande (230) transmet le paquet à l'hôte émetteur-récepteur (100) lorsque des données provenant du module de surveillance (220) comparées à la valeur par défaut du programme d'état de pneus (232) montrent un état anormal.

4. - Système de pression de pneus à transmission Bluetooth en duplex selon la revendication 1, dans lequel l'hôte émetteur-récepteur (100) commande le programme de localisation (231) et le programme d'état de pneus (232) de l'unité de commande (230) par Bluetooth pour fonctionner simultanément.

5. - Système de pression de pneus à transmission Bluetooth en duplex selon la revendication 1, dans lequel l'hôte émetteur-récepteur (100) commande le programme de localisation (231) de l'unité de commande (230) pour qu'il fonctionne d'abord, puis le programme d'état de pneus (232) de l'unité de commande (230) démarre après la fin du fonctionnement du programme de localisation (231).

6. - Procédé de détection Bluetooth en duplex de pression de pneus, comprenant :
le démarrage d'un véhicule ;
un émetteur-récepteur hôte (100) transmet un paquet de commande Bluetooth à un détecteur de pression de pneus Bluetooth (200) pour démarrer un programme de localisation (231) ;
un module de surveillance (220) du détecteur de pression de pneus Bluetooth (200) détecte une rotation de pneu et génère un paquet de localisation Bluetooth ; et
le détecteur de pression de pneus Bluetooth (200) transmet le paquet de localisation Bluetooth à l'hôte émetteur-récepteur (100) ;
**caractérisé par le fait que** le procédé comprend en outre :
l'hôte émetteur-récepteur (100) reçoit le paquet de localisation Bluetooth jusqu'à ce que la localisation soit terminée ;
l'hôte émetteur-récepteur (100) transmet le paquet de commande Bluetooth au détecteur de pression de pneus Bluetooth (200) pour arrêter le programme de localisation (231) et démarrer le programme d'état de pneus (232) ;
le module de surveillance (220) du détecteur de pression de pneus Bluetooth (200) détecte une rotation de pneu et génère un paquet d'état de pneus Bluetooth ;
le détecteur de pression de pneus Bluetooth (200) transmet le paquet d'état de pneus Bluetooth à l'hôte émetteur-récepteur (100).

7. - Procédé de détection Bluetooth en duplex de pression de pneus selon la revendication 6, dans lequel, lorsque l'hôte émetteur-récepteur (100) commande l'unité de commande (230) par Bluetooth pour commander le programme d'état de pneus (232) et limiter la transmission des données du module de surveillance (220), l'unité de commande (230) transmet le paquet à l'hôte émetteur-récepteur (100) lorsque des données provenant du module de surveillance (220) comparées à la valeur par défaut du programme d'état de pneus (232) montrent un état anormal.

8. - Procédé de détection Bluetooth en duplex de pression de pneus, comprenant :
le démarrage d'un véhicule ;
un hôte émetteur-récepteur (100) transmet un paquet de commande Bluetooth à un détecteur de pression de pneus Bluetooth (200) pour démarrer un programme de localisation (231) et un programme d'état de pneus (232) ;
le détecteur de pression de pneus Bluetooth (200) détecte une rotation de pneu et génère un paquet de localisation Bluetooth et un paquet d'état de pneus Bluetooth ;
le détecteur de pression de pneus Bluetooth (200) transmet le paquet de localisation Bluetooth et le paquet d'état de pneus Bluetooth à l'hôte émetteur-récepteur (100) ;
**caractérisé par le fait que** le procédé comprend en outre :
l'hôte émetteur-récepteur (100) reçoit le paquet de localisation Bluetooth jusqu'à ce que la localisation soit terminée ;
un hôte émetteur-récepteur (100) transmet un paquet de commande Bluetooth à un détecteur de pression de pneus Bluetooth (200) pour arrêter un programme de localisation (231).

9. - Procédé de détection Bluetooth en duplex de pression de pneus selon la revendication 8, dans lequel, lorsque l'hôte émetteur-récepteur (100) commande l'unité de commande (230) par Bluetooth pour commander le programme d'état de pneus (232) et limiter la transmission des données du module de surveillance (220), l'unité de commande (230) transmet le paquet à l'hôte émetteur-récepteur (100) lorsque des données provenant du module de surveillance (220) comparées à la valeur par défaut du programme d'état de pneus (232) montrent un état anormal.
